# EUROPEAN PATENT SPECIFICATION

(11) **EP 2 666 831 B1**
(45) Date of publication and mention of the grant of the patent: **23.11.2016**
(21) Application number: 11856609.0
(22) Date of filing: 03.06.2011
(51) Int. Cl.: C09C 1/62, C09C 1/64, C09C 1/66, C09C 1/00, C09D 5/38

(54) **WATERPROOF PIGMENT, PREPARING METHOD AND USE THEREOF**
WASSERDICHTES PIGMENT, HERSTELLUNGSVERFAHREN UND SEINE VERWENDUNG
PIGMENT IMPERMÉABLE À L'EAU, PROCÉDÉ DE PRÉPARATION ET UTILISATION ASSOCIÉE

(30) Priority: 17.01.2011 CN 201110009246
(43) Date of publication of application: 27.11.2013
(73) Proprietor: Shantou Longhua Pearl Lustre Pigments Co., Ltd, Guangdong 515021 (CN)
(72) Inventor: FU, Jiansheng, Shantou Guangdong 515021 (CN); LONG, Fen, Shantou Guangdong 515021 (CN); ZHANG, Junli, Shantou Guangdong 515021 (CN)
(74) Representative: Petraz, Gilberto Luigi
(86) International application number: PCT/CN2011/075248
(87) International publication number: WO 2012/097562

(56) References cited:
- EP-A1- 1 288 265
- EP-A1- 2 128 203
- WO-A1-2009/144023
- WO-A2-2009/152941
- CN-A- 1 538 995
- CN-A- 1 549 848
- CN-A- 1 549 848
- CN-A- 1 784 477
- CN-A- 101 679 778
- CN-A- 101 875 794
- US-A1- 2002 134 282
- GAO,AIHUAN ET AL.: 'Research progress of surface modification of aluminum pigments for corrosion protection' CHEMICAL INDUSTRY AND ENGINEERING PROGRESS vol. 3, no. 28, 2009, pages 485 - 490, XP008169958

## Description

### FIELD OF THE INVENTION

The present invention relates to a preparing method for preparing a waterproof pigment containing active metal.

### BACKGROUND OF THE INVENTION

It is well known that the reaction between aluminum and water is an oxidation-reduction reaction, generating an alumina film on the aluminum surface and releasing hydrogen gas at the same time. Due to a large specific surface area, an aluminum pigment will cause a drastic reaction and release large amounts of hydrogen gas when it is used for water-based coating products, for this reason, uncoated aluminum pigment cannot be well used for waterborne coating products and printing ink.

To enable the aluminum pigment to be available for waterborne coating products and paint, a post-processing, i.e. a coating process, is thus required for the aluminum pigment. In this coating process, the surface of aluminum pigment is coated with one or more layer of inert compounds, for example, the aluminum pigment is compactly encapsulated in a silicon dioxide layer. This kind of coating is called "bag-like encapsulation", it refers to a complete coating of all sides of the aluminum pigment with silicon dioxide, which is somewhat like putting aluminium powder into a bag. In this way, the aluminium powder can be completely separated from water, thereby preventing contact between the surface of aluminum pigment particles and water, preventing the oxidation-reduction reaction of aluminum, and facilitating the use of aluminum pigment in waterborne coating products and paint.

To achieve certain optical effects or other desired effects, some special pigments are provided, they have naked aluminum surface. This kind of pigment can be, for example, a composite pigment with "sandwich" structure, the pigment particle has one or more layer of metallic aluminum in the middle thereof, the aluminum layer can be very thin with the thickness just being a few tens of nanometers. Due to quantum effect, the oxidation-reduction reaction between the thin aluminum layer and water can be instantaneous and strong, releasing large amounts of hydrogen gas and resulting in great risk during the process of transportation, storage, and using. This is especially important when the aluminum pigment is used for waterborne coating products, paint and printing ink, because the generation of hydrogen gas may cause safety issues during operation, or it may affect the quality of coating and ink printing.

Limited by preparing method, or due to the special effect given by the "sandwich" structure itself, the sandwich-structured pigment having special effect cannot be applied with "bag-like encapsulation" which is widely applied for pearlescent pigment.

If the "bag-like encapsulation" is applied on the sandwich-structured special pigments, such as by using silicon dioxide, the optical effect of the special pigments would be changed due to different refractive index of different material, what's worse, the special pigment would obtain other optical effects instead of their original effect.

EP 1.288.265 discloses an interference pigment, to be used in ink compositions, having a stacked planar structure comprising at least a metallic layer located between at least two dielectric layers whose edge is treated with a passivating agent so as to improve the water resistance.

US 2002/134282 discloses a flake shaped, metal oxide coated soft iron pigment with metallic luster, which also has orientability with the aid of an external magnetic field and is supposed to be stable in slight alkaline conditions. Flake shaped soft iron pigment can be passivated prior to the coating.

### SUMMARY OF THE INVENTION

An object of the present invention is to provide a process for preparing a waterproof and sandwich-structured pigment which contains active metal and has special effect.

The object of the present invention can be achieved by the following technical solution: a process for preparing a waterproof pigment having a primary flake, with the primary flake having a layered structure of at least three layers including a top layer, an assembled intermediate layer and a bottom layer, and the assembled intermediate layer having at least one active metal layer, the waterproof pigment has a coating only on the side of the primary flake. In a preferred embodiment of the present invention, the waterproof pigment has a coating only on the side of the active metal layer.

The pigment obtained by the process of the present invention employs a ring-shaped coating, in this way, only the metal surface of the metal layer of the sandwich- structured pigment is coated. By using this kind of coating, the metal surface can be completely separated from water, thereby preventing the oxidation-reduction reaction and the generation of hydrogen gas; additionally, the optical property of the special pigment with "sandwich" structure will not be influenced. The primary flake of the present invention can be Bright Siver pigment (produced by JDSU in USA, SpectraFlair®).

In a preferred embodiment of the waterproof pigment obtained by the process of the present invention, the active metal layer of the waterproof pigment is an aluminum layer or a copper layer.

In a preferred embodiment of the waterproof pigment obtained by the process of the present invention, the coating is one selected from the group consisting of fatty acids, salts of fatty acids, amino acids, salts of amino acids, phosphate esters, salts of phosphate esters, polybasic weak acids, salts of polybasic weak acids and organic silicon compounds. More preferably, the coating is one selected from the group consisting of sulfonates, alkyl sulfonates, polysulfonic acids, phosphoric acids, phosphates and polyphosphoric acids.

In a preferred embodiment of the waterproof pigment obtained by the process of the present invention, the coating is one selected from the group consisting of tin tetrachloride, stannous chloride, zirconium oxychloride, sodium silicate, sodium aluminate, aluminum chloride, bismuth nitrate, calcium chloride and magnesium chloride.

The present invention provides a process of preparing a waterproof pigment, comprising the steps of:
(1) mixing 70-100 parts by volume of water with 5-40 parts by volume of alcohol or ether homogeneously to obtain a mixture A;
(2) adding a coating agent to the mixture A with the amount of coating agent being between 5 percent and 15 percent by weight of the mixture A, then completely dissolving the coating agent to obtain a mixture B;
(3) heating the mixture B to a temperature of 45°C, and adjusting pH to a level of between 7 and 9, then adding a primary flake to the mixture B with the amount of primary flake being between 1 percent by weight and 5 percent by weight of the mixture B, and reacting for 0.5-6 hours;
(4) filtering and drying the product of step (3) to obtain the waterproof pigment;
wherein the primary flake has a layered structure of at least three layers, including a top layer, an assembled intermediate layer and a bottom layer, and the assembled intermediate layer has at least one active metal layer. The metal layer is an aluminum layer or a copper layer.

In the process of the present invention, only compounds that can be selectively adsorbed onto or reacted with aluminum layer or copper layer are selected, these compounds can be adsorbed only on the metal surface of the metal layer of the sandwich-structured special pigment, after adsorption, these compounds can be reacted with the metal to form a ring-shaped coating structure. In this wary, the metal surface can be completely separated from water, thereby preventing the oxidation-reduction reaction and the generation of hydrogen gas. Because the compounds don't react with the top layer or the bottom layer of the flaky sandwich-structured pigment, the optical property of the pigment will not be influenced by the coating. Furthermore, these compounds have certain dispersing property in water, which enable the special pigments with ring-shaped coating to be available for waterborne coating products, paint and printing ink.

The primary flake of the present invention can be Bright Siver pigment (produced by JDSU in USA, SpectraFlair®).

In a preferred embodiment of the process of the present invention, the coating is one selected from the group consisting of fatty acids, salts of fatty acids, amino acids, salts of amino acids, alkyl sulfonates, phosphate esters, salts of phosphates, polybasic weak acids, salts of polybasic weak acids and organic silicon compounds. More preferably, the coating is one selected from the group consisting of sulfonates, polysulfonic acids, phosphoric acids, phosphates and polyphosphoric acids.

In a preferred embodiment of the process of the present invention, the coating is one selected from the group consisting of tin tetrachloride, stannous chloride, zirconium oxychloride, sodium silicate, sodium aluminate, aluminum chloride, bismuth nitrate, calcium chloride and magnesium chloride.

### DETAILED DESCRIPTION OF THE PREFERRED EMBODIMENTS OF THE INVENTION

The present invention will be more fully understood and appreciated from the following detailed description.

### Reference Example 1

A process of preparing a waterproof pigment, comprising the steps of:
(1) mixing 70 parts by volume of water with 5 parts by volume of ethanediol homogeneously to obtain a mixture A;
(2) adding a coating agent sodium silicate to the mixture A with the amount of sodium silicate being 5 percent by weight of the mixture A, then completely dissolving the sodium silicate to obtain a mixture B;
(3) heating the mixture B to a temperature of 25°C, and adjusting pH to a level of 7, then adding a primary flake to the mixture B with the amount of primary flake being 1 percent by weight of the mixture B, and reacting for 0.5 hour;
(4) filtering the product of step (3) to obtain the waterproof pigment;
   wherein the primary flake has a layered structure of three layers, including a top layer, an assembled intermediate layer and a bottom layer, the assembled intermediate layer is an aluminum layer.

### Example 2

A process of preparing a waterproof pigment, comprising the steps of:
(1) mixing 100 parts by volume of water with 40 parts by volume of isoamyl alcohol homogeneously to obtain a mixture A;
(2) adding a coating agent sodium dodecyl sulfate to the mixture A with the amount of sodium dodecyl sulfate being 15 percent by weight of the mixture A, then completely dissolving the sodium dodecyl sulfate to obtain a mixture B;
(3) heating the mixture B to a temperature of 45°C, and adjusting pH to a level of 9, then adding a primary flake to the mixture B with the amount of primary flake being 5 percent by weight of the mixture B, and reacting for 2 hours;
(4) filtering the product of step (3) to obtain the waterproof pigment;
wherein the primary flake has a layered structure of five layers, including a top layer, an assembled intermediate layer and a bottom layer, the assembled intermediate layer has an aluminum layer and a copper layer.

### Reference Example 3

A process of preparing a waterproof pigment, comprising the steps of:
(1) mixing 80 parts by volume of water with 20 parts by volume of diethyl ether homogeneously to obtain a mixture A;
(2) adding a coating agent silane to the mixture A with the amount of silane being 10 percent by weight of the mixture A, then completely dissolving silane to obtain a mixture B;
(3) heating the mixture B to a temperature of 30°C, and adjusting pH to a level of 8, then adding a primary flake to the mixture B with the amount of primary flake being 2 percent by weight of the mixture B, and reacting for 1 hour;
(4) filtering the product of step (3) to obtain the waterproof pigment;
wherein the primary flake has a layered structure of three layers, including a top layer, an assembled intermediate layer and a bottom layer, the assembled intermediate layer is a copper layer.

### Reference Example 4

A process of preparing a waterproof pigment, comprising the steps of:
(1) mixing 90 parts by volume of water with 20 parts by volume of propylene glycol homogeneously to obtain a mixture A;
(2) adding a coating agent sodium dihydrogen phosphate to the mixture A with the amount of sodium dihydrogen phosphate being 8 percent by weight of the mixture A, then completely dissolving sodium dihydrogen phosphate to obtain a mixture B;
(3) heating the mixture B to a temperature of 30°C, and adjusting pH to a level of 7.5, then adding a primary flake to the mixture B with the amount of primary flake being 3 percent by weight of the mixture B, and reacting for 1.5 hours;
(4) filtering the product of step (3) to obtain the waterproof pigment;
wherein the primary flake has a layered structure of five layers, including a top layer, an assembled intermediate layer and a bottom layer, the assembled intermediate layer has two aluminum layers.

### Reference Example 5

A process of preparing a waterproof pigment, comprising the steps of:
(1) mixing 85 parts by volume of water with 38 parts by volume of hexadecanediol homogeneously to obtain a mixture A;
(2) adding a coating agent sodium glutamate to the mixture A with the amount of sodium glutamate being 12 percent by weight of the mixture A, then completely dissolving sodium glutamate to obtain a mixture B;
(3) heating the mixture B to a temperature of 25°C, and adjusting pH to a level of 8.5, then adding a primary flake to the mixture B with the amount of primary flake being 4 percent by weight of the mixture B, and reacting for 4 hours;
(4) filtering and drying the product of step (3) to obtain the waterproof pigment;
wherein the primary flake is Bright Siver pigment (produced by JDSU in USA, SpectraFlair®).

### Reference

A process of preparing a waterproof pigment, comprising the steps of:
(1) mixing 89 parts by volume of water with 30 parts by volume of palmityl alcohol homogeneously to obtain a mixture A;
(2) adding a coating agent lecithin to the mixture A with the amount of lecithin being 6 percent by weight of the mixture A, then completely dissolving lecithin to obtain a mixture B;
(3) heating the mixture B to a temperature of 35°C, and adjusting pH to a level of 8.3, then adding a primary flake to the mixture B with the amount of primary flake being 5 percent by weight of the mixture B, and reacting for 1 hour;
(4) filtering and drying the product of step (3) to obtain the waterproof pigment;
wherein the primary flake is Bright Siver pigment (produced by JDSU in USA, SpectraFlair®).

### Example 7

A process of preparing a waterproof pigment, comprising the steps of:
(1) mixing 90 parts by volume of water with 40 parts by volume of glycerol homogeneously to obtain a mixture A;
(2) adding a coating agent stannous chloride to the mixture A with the amount of stannous chloride being 15 percent by weight of the mixture A, then completely dissolving stannous chloride to obtain a mixture B;
(3) heating the mixture B to a temperature of 45°C, and adjusting pH to a level of 9, then adding a primary flake to the mixture B with the amount of primary flake being 4.5 percent by weight of the mixture B, and reacting for 5 hours;
(4) filtering and drying the product of step (3) to obtain the waterproof pigment;
wherein the primary flake has a layered structure of three layers, including a top layer, an assembled intermediate layer and a bottom layer, the assembled intermediate layer is an aluminum layer.

### Example 8

A process of preparing a waterproof pigment, comprising the steps of:
(1) mixing 70 parts by volume of water with 5 parts by volume of octanol homogeneously to obtain a mixture A;
(2) adding a coating agent sodium tripolyphosphate to the mixture A with the amount of sodium tripolyphosphate being 5 percent by weight of the mixture A, then completely dissolving stannous chloride to obtain a mixture B;
(3) heating the mixture B to a temperature of 25-45°C, and adjusting pH to a level of 7-9, then adding a primary flake to the mixture B with the amount of primary flake being 2.5 percent by weight of the mixture B, and reacting for 6 hours;
(4) filtering and drying the product of step (3) to obtain the waterproof pigment;
wherein the primary flake has a layered structure of five layers, including a top layer, an assembled intermediate layer and a bottom layer, the assembled intermediate layer has two aluminum layers.

### Example 9

The top layer, the bottom layer and the side of the waterproof pigments prepared by Example 1∼8 were analyzed through Scanning Electron Microscope (SEM) and Energy Dispersion Spectrum (EDS), and the analysis results were as follows.

**Table 1**

| Sample | Elements of the top layer (wt%) | Elements of the bottom layer (wt%) | Elements of the side (wt%) |
|---|---|---|---|
| Example 1 | O: 8.90 | O: 8.92 | O: 9.74 |
| Example 2 | S:0.0 | S:0.0 | S:0.15 |
| Example 3 | C:0.0 | C:0.0 | C:16.0 |
| Example 4 | P:0.0 | P:0.0 | P:0.1 |
| Example 5 | C:0.0 | C:0.0 | C:24.0 |
| Example 6 | P:0.0 | P:0.0 | P:0.08 |
| Example 7 | Sn:0.0 | Sn:0.0 | Sn:0.11 |
| Example 8 | P:0.0 | P:0.0 | P:0.06 |
| Comparative Example | O:8.88; S:0.0; C:0.0; P:0.0; Sn:0.0 | O:8.88; S:0.0; C:0.0; P:0.0; Sn:0.0 | O: 8.88; S:0.0; C:0.0; P:0.0; Sn:0.0 |

Untreated primary flake is used as the control in the comparative example.

It can be seen from the above table that the waterproof pigments prepared by the process of the present invention have a protective layer only on the side of the pigments.

### Example 10

10g of the waterproof pigments prepared by Example 1∼8 were respectively added into an enough amount of a waterborne coating product having a water content of 10%, the volume of released hydrogen was measured after the waterproof pigments had been immersed for 25h, 50h and 100h, and the results were shown in Table 2.

**Table 2**

| Sample | Volume of H₂ after being immersed for 25h (ml) | Volume of H₂ after being immersed for 50h (ml) | Volume of H₂ after being immersed for 100h (ml) |
|---|---|---|---|
| Example 1 | 1.1 | 2.6 | 19 |
| Example 2 | 1.2 | 2.2 | 13 |
| Example 3 | 1.0 | 2.0 | 17 |
| Example 4 | 1.3 | 2.2 | 18 |
| Example 5 | 0.9 | 1.9 | 10 |
| Example 6 | 0.8 | 2.1 | 16 |
| Example 7 | 1.5 | 2.5 | 14 |
| Example 8 | 1.1 | 2.0 | 17 |
| Comparative Example | 17 | 23 | 24 |

Untreated primary flake is used as the control in the comparative example.

It can be seen from the above table that the waterproof pigments prepared by the process of the present invention have much better waterproof property as compared with the untreated pigment.

It is intended that the foregoing examples be regarded as illustrative rather than limiting, although a few examples of this invention have been described in detail above, those skilled in the art will readily appreciate that many modifications are possible without materially departing from the novel teachings and advantages of the invention. It is the following claims, including all equivalents, that are intended to define the spirit and scope of this invention.

## Claims

1. A process of preparing a waterproof pigment comprising the steps of:
(1) mixing 70-100 parts by volume of water with 5-40 parts by volume of alcohol or ether homogeneously to obtain a mixture A;
(2) adding a coating agent to the mixture A with the amount of coating agent being between 5 percent and 15 percent by weight of the mixture A, then completely dissolving the coating agent to obtain a mixture B;
(3) heating the mixture B to a temperature of 45°C, and adjusting pH to a level of between 7 and 9, then adding a primary flake to the mixture B with the amount of primary flake being between 1 percent by weight and 5 percent by weight of the mixture B, and reacting for 0.5-6 hours;
(4) filtering and drying the product of step (3) to obtain the waterproof pigment;
wherein the primary flake has a layered structure of at least three layers, including a top layer, an assembled intermediate layer and a bottom layer, and the assembled intermediate layer has at least one active metal layer.

2. The process of preparing a waterproof pigment as claimed in claim 1, **characterized in that**, the coating is one selected from the group consisting of fatty acids, salts of fatty acids, amino acids, salts of amino acids, phosphate esters, salts of phosphate esters, alkyl sulfonates, polybasic weak acids, salts of polybasic weak acids and organic silicon compounds.

3. The process of preparing a waterproof pigment as claimed in claim 1, **characterized in that**, the coating is one selected from the group consisting of tin tetrachloride, stannous chloride, zirconium oxychloride, sodium silicate, sodium aluminate, aluminum chloride, bismuth nitrate, calcium chloride and magnesium chloride.

4. The process of preparing a waterproof pigment as claimed in claim 2, **characterized in that**, the coating is one selected from the group consisting of sulfonates, polysulfonic acids, phosphoric acids, phosphates and polyphosphoric acids.

5. The process of preparing a waterproof pigment as claimed in claim 1, **characterized in that**, the active metal layer is an aluminum layer or a copper layer.

## Patentansprüche

1. Verfahren zur Herstellung eines wasserdichten Pigments, umfassend die Schritte von:
(1) Mischen von 70-100 Volumenanteilen Wasser mit 5-40 Volumenanteilen Alkohol oder Ether in homogener Weise, um ein Gemisch A zu erhalten;
(2) Hinzugeben eines Beschichtungsmittels zum Gemisch A, wobei der Anteil an Beschichtungsmittel zwischen 5 und 15 Gewichtsprozent des Gemisches A liegt, dann vollständiges Auflösen des Beschichtungsmittels, um ein Gemisch B zu erhalten;
(3) Erhitzen des Gemisches B auf eine Temperatur von 45°C, und Einstellen des pHs auf ein Niveau zwischen 7 und 9, dann Hinzugeben einer primären Flocke zum Gemisch B mit dem Anteil an primärer Flocke zwischen 1 Gewichtsprozent und 5 Gewichtsprozent des Gemisches B, und Reagieren für 0,5-6 Stunden;
(4) Filtern und Trocknen des Produktes vom Schritt (3), um das wasserdichte Pigment zu erhalten;
worin die primäre Flocke eine Mehrschichtenstruktur mit zumindest drei Schichten aufweist, umfassend eine Oberschicht, eine zusammengebaute Zwischenschicht und eine Bodenschicht, und die zusammengebaute Zwischenschicht zumindest eine aktive Metallschicht aufweist.

2. Verfahren zur Herstellung eines wasserdichten Pigments nach Anspruch 1, **dadurch gekennzeichnet, dass** es sich bei der Beschichtung um eine handelt, die aus der Gruppe gewählt ist, welche aus Fettsäuren, Fettsäuresalzen, Aminosäuren, Aminosäuresalzen, Phosphatestern, Phosphatestersalzen, Alkylsulfonaten, mehrbasischen schwachen Säuren, Salzen von mehrbasischen schwachen Säuren und organischen Siliziumverbindungen besteht.

3. Verfahren zur Herstellung eines wasserdichten Pigments nach Anspruch 1, **dadurch gekennzeichnet, dass** es sich bei der Beschichtung um eine handelt, die aus der Gruppe gewählt ist, welche aus Zinntetrachlorid, Zinndichlorid, Zirkonoxychlorid, Natriumsilikat, Natriumaluminat, Aluminiumchlorid, Wismutnitrat, Calciumchlorid und Magnesiumchlorid besteht.

4. Verfahren zur Herstellung eines wasserdichten Pigments nach Anspruch 2, **dadurch gekennzeichnet, dass** es sich bei der Beschichtung um eine handelt, die aus der Gruppe gewählt ist, welche aus Sulfonaten, Polysulfonsäuren, Phosphorsäuren, Phosphaten und Polyphosphorsäuren besteht.

5. Verfahren zur Herstellung eines wasserdichten Pigments nach Anspruch 1, **dadurch gekennzeichnet, dass** die aktive Metallschicht eine Aluminiumschicht oder eine Kupferschicht ist.

## Revendications

1. Procédé de préparation d'un pigment imperméable à l'eau, comprenant les étapes suivantes :
(1) mélanger de façon homogène 70 - 100 parties en volume d'eau avec 5 - 40 parties en volume d'alcool ou éther pour obtenir un mélange A ;
(2) ajouter un agent de revêtement au mélange A, la quantité d'agent de revêtement étant de 5 pour cent à 15 pour cent en poids du mélange A, et en suite dissoudre l'agent de revêtement pour obtenir un mélange B ;
(3) chauffer le mélange B à une température de 45°C, et régler le pH à un niveau de 7 à 9, et en suite ajouter au mélange B une écaille primaire, la quantité d'écaille primaire étant d'1 pour cent en poids à 5 pour cent en poids du mélange B, et laisser à rèagir pendant 0,5-6 heures ;
(4) filtrer et sécher le produit de l'étape (3) pour obtenir le pigment imperméable à l'eau ;
dans lequel l'écaille primaire a une structure en couches d'au moins trois couches, comprenant une couche supérieure, une couche intermédiaire assemblée et une couche inférieure, et la couche intermédiaire assemblée a au moins une couche de métal actif.

2. Procédé de préparation d'un pigment imperméable à l'eau selon la revendication 1, **caractérisé en ce que** le revêtement et du type choisi dans le groupe constitué par les acides gras, les sels d'acides gras, les acides aminés, les sels d'acides aminés, les esters phosphates, les alkyl sulfonates, les acides faibles polybasiques, les sels d'acides faibles polybasiques et les composés de silicium organique.

3. Procédé de préparation d'un pigment imperméable à l'eau selon la revendication 1, **caractérisé en ce que** le revêtement est choisi dans le groupe constitué par le tétrachlorure d'étain, le chlorure stanneux, l'oxychlorure de zirconium, le silicate de sodium, l'aluminate de sodium, le chlorure d'aluminium, le nitrate de bismuth, le chlorure de calcium et le chlorure de magnésium.

4. Procédé de préparation d'un pigment imperméable à l'eau selon la revendication 2, **caractérisé en ce que** le revêtement est du type choisi dans le groupe constitué par les sulfonates, les acides polysulfoniques, les acides phosphoriques, les phosphates et les acides polyphosphoriques.

5. Procédé de préparation d'un pigment imperméable à l'eau selon la revendication 1, **caractérisé en ce que** la couche métallique active est une couche d'aluminium ou une couche de cuivre.
